(19) **Europäisches Patentamt**

**European Patent Office**

**Office européen des brevets**

(11) **EP 0 892 191 A1**

(12) **EUROPEAN PATENT APPLICATION**
published in accordance with Art. 158(3) EPC

(43) Date of publication:
20.01.1999 Bulletin 1999/03

(21) Application number: 97906354.2

(22) Date of filing: 21.02.1997

(51) Int. Cl.$^6$: **F16D 69/02**, C08J 5/14

(86) International application number:
PCT/RU97/00042

(87) International publication number:
WO 97/31196 (28.08.1997 Gazette 1997/37)

(84) Designated Contracting States:
**DE FR IT SE**

(30) Priority: 23.02.1996 RU 96103599

(71) Applicant:
**Pinkhasovich, Anatoly Veniaminovich
Moscow, 113452 (RU)**

(72) Inventor:
**Pinkhasovich, Anatoly Veniaminovich
Moscow, 113452 (RU)**

(74) Representative:
**Kidd, Piers Burgess
Marks & Clerk,
57-60 Lincoln's Inn Field
London WC2A 3LS (GB)**

(54) **REINFORCING FILLER, FRICTION POLYMER COMPOSITE MATERIAL AND A BRAKE FRICTION ELEMENT**

(57)    The invention relates to the field of friction polymer composite materials, fillers for said materials and articles made from these materials, specifically, friction elements in brake systems and clutch mechanisms in vehicles and industrial equipment used in various technical fields. In essence the invention lies in the following: a reinforcing filler in the form of a knitted fabric is used to produce a friction polymer composite material; the knitted fabric is formed from a complex fibre made of glass, basalt and copper fibres or from glass and basalt fibres or from basalt and copper fibres. Also disclosed as part of the invention are the proportions by volume of basalt, glass and copper fibres in the knitted fabric and relative proportions by weight of the reinforcing filler and polymer material. The use of a lining made from the claimed friction polymer material is proposed for producing friction elements for vehicle brake systems.

EP 0 892 191 A1

## Description

Field of the invention

The invention relates to the field of friction polymer composite materials, fillers for said materials and articles made from these materials, in particular friction elements in brakes, clutch arrangements in vehicles and production equipment used in various technical fields.

The prior art

The modern state of the art is characterized by going from the usage of asbestos-containing filler for friction composite materials to asbestosless materials. This is connected with extremely high hazard of fine dispersion asbestos dust for human health.

In a great number of technical solutions there is suggested to use textile fabric fillers in combination with powders of various minerals, chemical compounds and metal chips. The textile fabric fillers are presented by either fine-chopped filaments and fibres or by three-dimensional structures, for example clothes.

As an example, there is known a reinforcing filler for friction polymer composite materials which contains filamentous carbon or aramide fibres, copper-zinc powder, graphite, molyodenum disulfide, silicon dioxide. The filler is mixed with a binder on base of the phenol resin, is cured and is produced into material from which brake linings are made for motor vehicle brake blocks.

(DE application 3930402, CO8J 5/4, publ. 1991.)

It is known to use a polymer composite material made on base of the phenolformaldehyde matrix and containing butadiene-nitrile rubber, basalt-, glass- and carbon fibres, bronze chips, copper powder and other special admixtures. The material is produced in result of the two-stage compaction and is used as friction linings of brake blocks.

(The USSR inventor's certificate No. 1557989, CO8J 5/14.)

The physic-mechanical properties of articles made of the said material are the following:

the ultimate strenght of the connection between the lining and the metal reinforcement, kH

| | |
|---|---|
| under indoor temperature | $26.3 - 27.5$ |
| after heat action under $600°C$ for 1 hour | $3.9 - 4.1;$ |
| the wear rate of the lining, $m^3/J \cdot 10^{-12}$ | $0.33 - 0.4;$ |
| the dynamic friction coefficient at $150°C$ | $0.27 - 0.3.$ |

A motor vehicle brake block is known which consists of a metal plate (reinforcement), an intermediate layer which presents the polymer composite with the filler from glass cloth on base of phenol creosol novalac, and a friction layer. The use of the intermediate layer solves the task to increase the shear strength of the friction lining.

(DE patent 3617846, F 16D 69/04, publ. 1991.)

All cited technical solutions are characterized in that the friction polymer composite material is formed from a mixture of fine dispersion filler in liquid binder and the binder presents phenolformaldehyde resin and laquers on the base thereof. Therefore these technical solutions are peculiar to ones and the same disadvantages.

In contrast to other binders applied in the production of composite materials, the polymerized phenolformaldehyde resin under heating above 275°C is becoming carbonized with saving the strength characteristics of the composite. However the graphite, which has low friction properties, is appearing in the material composition.

The friction properties of the brake lining are defined by a variety of ingredients of the filler and by an area of the polymer matrix on the work surface thereof. When using the "mixtural" production technology the polymer matrix occupies above 90 per cent of the area of the lining's work surface therefore the dynamic friction coefficient of exclusively all linings produced by this technology is defined by the graphite of the polymer matrix and does not exceed 0.3. The coefficient does not depend on a number of compounds and quantity relations thereof (of fillers and special admixtures).

This conclusion is supported by data of technical conditions on brake blocks and clutch plates of Russian motor vehicle plants under testing "new" articles supplied by the producer-plant. The dynamic friction coefficient of an article can make up 0,45 - 0,52, but it rapidly decreases to 0,3 under increasing temperatures on the friction contact. The repeated tests show that this coefficient remains in terms of 0.3 at all range of temperatures corresponding to conditions of the work of the friction mechanism.

A cocked matrix of the friction mechanism, produced according to the "mixing" technology, characterized by the brittleness and under loads acting during the braking, cracks. Fine dispersion fillers do not prevent this phenomenon since they do not form a monolith layer. Therefore the wear of brake linings goes not only by the abrasion but also due to the flaking of the material on edges of microcraks.

Analogues in which three-dimensional textile structures are used as fillers are known and among them there are as following below.

There is a motor vehicle clutch plate consisting of two parts, main and strengthening ones. The strengthening part is made of a glass one-directed braid and polyamide staple fibres which are impregnated by a polymer binder containing the phenol resin and butadiene rubber, and then they are twisted into a cord. After that, a disk is formed from this cord laying it in a form of the spiral and pressing. The main part is compacted, at indoor temperatures, from the mixture of phenol resin, fine-dispersion fillers and special admixtures (chopped glass fibres, Kevlar polyamide fibres and others). The strengthening part and the main part are joined in a mould and are compacted under the pressure with heating for 3-6 hours.

(DE application 4018671, CO8J 5/14, publ. 1990.)

The most close technical solution to the invention's subject is a blank reinforced by fibres from textile material being a reinforcing filler impregnated by a thermoreactive resin, the weight share of which accounts for 30-70% of the blank. The reinforcing filler can represents a textile material preferably from high strength textured polyacrylonitrile threads. As a binder, a modified phenol resin is used which forms polymer matrix containing the fluorpolymer up to 25%. The method for producing the friction polymer composite material consists in that the blank made by the above mentioned method is laid in some layers and is formed in a mould at 160°C under pressure of 5-6MPf.

(DE application 4010694, CO8J 5/04, publ. 1991.)

The friction lining fabricated by such a way is rigidly fixed on a steel bearing plate and is formed into a brake friction body - a motor vehicle brake block, for example.

This technical solution is deficient in that polyacrylonitrile threads have relative low temperature of the destruction and are suitable only for a limited number of friction materials. Replacing them by other threads, for example by glass ones, leads to that the multilayer material does not withstand shearing loads and cracks on layers of the fabric.

Disclosure of the invention

In is an object of the present invention to provide a new reinforcing filler, a friction polymer composite material on the base of this filler, and a brake friction body - a motor vehicle brake block, for example, which would have predermined friction characteristics not depending on duration and conditions of operation of the brake element, have the high shear strength and compression strength, the resistance to cracking and the high wear resistance.

The mentioned object is solved as appears from the below.

It is suggested to use, as a reinforcing filler for producing the friction polymer composite material, the knitted fabric knitted from the complex thread formed from glass, basalt threads, or basalt and copper threads.

For the friction polymer composite material consisting of the reinforcing filler and the polymer matrix there is suggested to use, as the filler, the mentioned knitted fabric in which the relation of components' volume shares is defined by the following equality:

$$f = 0.438 - 0.0013x1 + 0.0229x2 - 0.00068\,(x2)^2, \qquad (1)$$

in which

$f$ -    the friction coefficient of the friction material on steel or cast iron at 200 °C and the slip speed of 3.14 m/sec.;

x1 -    the volume share of the glass thread in the knitted fabric, % (0 < x1 <86);

x2 -    the volume share of the copper thread in the knitted fabric, % (0 < x2 < 28);

the volume share x3 (%) of the basalt thread in the knitted fabric makes up x3 = 100 - x1 - x2.

The selection values for x1, x2 is limited by the relationship

$$(x1/43 + 1)^2 + (x2/14 + 1)^2 = 1. \qquad (2)$$

The polymer matrix of the friction material is formed by the polymerization of the cocking binder where the weight relation of the reinforcing filler and the polymer matrix in the friction material constituted 70 +-5 : 30 -+5.

The brake friction body of a vehicle or any production equipment, preferably a motor vehicle brake block, consist of the carrying reinforcement and the lining rigidly fixed thereon and made of the claimed friction polymer composite material.

Brief Description of the Drawings

The invention is explained by the embodiments illustrated by the drawings which show:

Fig. 1 - the motor vehicle brake block for the disc brake;
Fig. 2 - the friction lining for the drum brake.

The best embodiment of the invention

As a reinforcing filler for producing the friction polymer composite material, we use the knitted fabric knitted from the complex thread formed from glass, basalt and copper threads, or glass and basalt threads, or basalt and copper threads.

The friction polymer composite material consisting of the reinforcing filler and the polymer matrix contains, as the filler, the mentioned knitted fabric in which the relation of components' volume shares is defined by the following equality:

$$f = 0.438 - 0.0013x1 + 0.0229x2 - 0.00068 \, (x2)^2, \qquad (1)$$

in which

$f$ -     the friction coefficient of the function material on steel or cast iron at 200 °C and the slip speed of 3.14 m/sec.;
x1 -     the volume share of the glass thread in the knitted fabric, % (0 < x1 < 86);
x2 -     the volume share of the copper thread in the knitted fabric, % (0 < x2 < 28);
        the volume share x3 (%) of the basalt thread in the knitted fabric makes up x3 = 100 - x1 - x2.
        The selection values for x1, x2 is limited by the relationship

$$(x1/43 + 1)^2 + (x2/14 + 1)^2 = 1. \qquad (2)$$

Table 1 represents values of the dynamic friction coefficient $f$ of the friction polymer composite material according to the equality (1).

According the equality (1) and using the data of Table 1, it is possible to select a raw composition of the knitted fabric in such a way that to produce the friction polymer composite material with a desired dynamic friction coefficient. It is obviously that the close values of $f$ correspond to different, by raw composition, knitted fabrics. This permits to select the raw composition of the reinforcing filler taking into account not only friction characteristics but other properties of friction material: the impact viscosity, the temperature conductivity and so on.

Table 1

## Values of the dynamic friction coefficient of the friction material

| x1 | x2 | | | | | | |
|---|---|---|---|---|---|---|---|
| | 0 | 5 | 10 | 15 | 20 | 25 | 28 |
| 0 | | | | 0.628 | | | |
| 10 | | | | 0.615 | | | |
| 20 | | | 0.573 | 0.602 | 0.589 | | |
| 30 | | | 0.560 | 0.589 | 0.585 | | |
| 40 | | 0.484 | 0.547 | 0.576 | 0.572 | 0.534 | |
| 43 | 0.382 | 0.480 | 0.543 | 0.572 | 0.568 | 0.530 | 0.486 |
| 50 | | 0.471 | 0.534 | 0.563 | 0.559 | 0.521 | |
| 60 | | | 0.521 | 0.550 | 0.546 | | |
| 70 | | | 0.508 | 0.537 | 0.533 | | |
| 80 | | | | 0.524 | | | |
| 86 | | | | 0.516 | | | |

In accordance with the equality (1) and using the data of Table 1, it is possible to select a raw composition of the knitted fabric in such a way that to produce the friction polymer composite material with a desired dynamic friction coefficient. It is obviously that different, by the raw composition, knitted fabrics correspond to the close values of $f$. This permits to select a raw composition of the reinforcing filler taking in account not only the friction characteristics but also other values of the friction material's properties: the impact viscosity, the temperature conductivity, etc.

The polymer matrix of the friction material is formed by the way of the polymerization of the cocking binder, and the relationship between the reinforcing filler and the polymer matrix in the friction material is 70 +-5 : 30 -+5.

The experimental examinations of nine friction composite materials on the base of knitted fabrics of different raw compositions show that the wear rate thereof are practically similar and apprecially less than the wear rate of materials fabricated by the "mixture" technology that is the wear of brake blocks fabricated according to the present invention does not depend on the selection of the raw composition of the filler and is defined only by its loop structure and by the residual strength of the thread in the knitted filler.

The friction polymer composite materials according to the invention have physic-mechanical and other properties shown in Table 2.

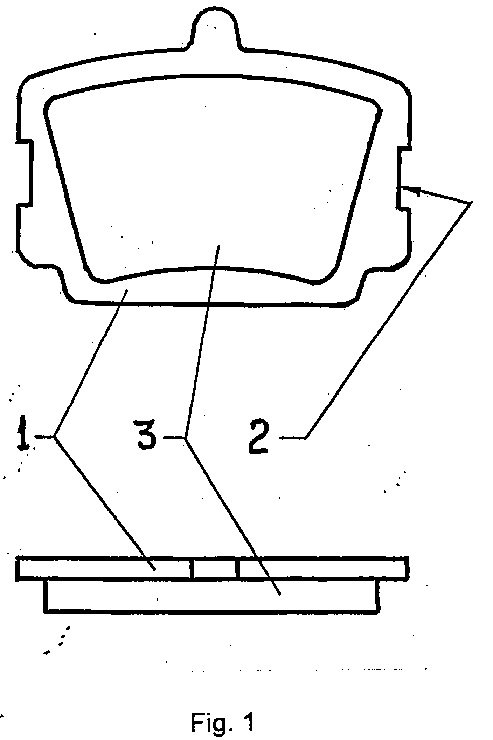

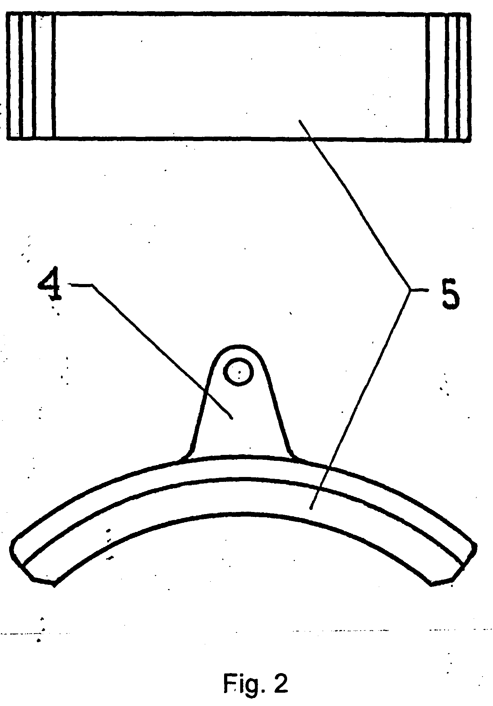

The motor vehicle brake block according to the invention - for a motor vehicle plate brake, for example, consists of the carrying reinforcement 1 (Fig. 1) represented by a flat plate with guides 2 for the installation of a block in a brake device, and of a lining 3 rigidly fixed thereon. The brake block for the drum brake consists of a reinforcement 4 (Fig. 2) presenting a lever mounted inside the brake drum and of a sickle-shape lining 5 rigidly fixed thereon. The linings of the both embodiments are made of the friction polymer material containing the reinforcing filler (knitted fabric) and the polymer matrix in the relationship 70 +-5 : 30 -+5.

Table 2

Physic-mechanical and other properties
of the suggested materials

| | Name | Properties of the material | |
| | | Prederte-mined | Actual |
|---|---|---|---|
| 1 | 2 | 3 | 4 |
| | **Physic-mechanical properties** | | |
| 1 | The density, g/cm$^3$ | 2.2-3.0 | 1.59 |
| | | | 1.55-1.65 |
| 2 | The content of the binder, % | --- | 29.50 |
| | | | 26.40-34.70 |
| 3 | The ultimate strength under the shear in the direction of the friction, MPa | not less 5 | 29.40 |
| | | | 23.10-36.80 |
| 4 | The compressive strength in the direction of applying the compression, MPa | not less 55 | 173.30 |
| | | | 164.20-196.70 |
| 5 | The tensile strength under tensiling in the direction of the friction, MPa | --- | 38.30 |
| | | | 36.40-40.50 |
| 6 | The modulus of elasticity under the tension in the direction of the friction, Mpa*10$^{+3}$ | 1.0-8.0 | 5.72 |
| | | | 5.31-6.12 |
| 7 | The tension elongation in direction of the friction, % | --- | 2.56 |
| | | | 2.19-2.78 |
| 8 | The breaking bending stress in direction of the friction, MPa | --- | 58.40 |
| | | | 54.50-62.70 |
| 9 | The calculated dynamic friction coefficient | 0.38-0.45 | on request |

| 1 | 2 | 3 | 4 |
|---|---|---|---|
| | **Thermophysical properties** | | |
| 10 | The thermal conductivity, W/m*K | 22.1-3.7 | 0.32 / 0.30-0.35 |
| 11 | The specific heat, KJ/kg*K | --- | 0.99 / 0.98-1.01 |
| 12 | The linear thermal expansion coefficient at 20-200°C, $1/1°*10^{-6}$ | --- | 11.30 / 8.00-15.00 |
| 13 | The heat capacity in Martens scale, grades | --- | 228 |
| | **Absorbtion of liquids** | | |
| 14 | Under submersion into water at 60°C for 4 hours, % | not more 0.3 | 0.26 / 0.21-0.28 |
| 15 | Under submersion into oil at 20°C for 4 hours, % | not more 0.3 | 0.23 / 0.18-0.27 |

An experimental batch of motor vehicle brake blocks, friction linings of which had the dynamic fiction coefficient equal to 0.6, had been test-operated in sports car BA3 (VAZ) 2109 during tests of the car, its departure check-out procedure and ring races. It has been found that the cracking of the linings is not observed, the wear thereof, for two-month operation, made up 2 mm and fiction properties did not became worse in spite of that the temperature on the fiction contact made up 600-700°C for long time.

Industrial Applicability

For embodiment of the claimed invention, there are used glass, basalt and cooper threads which are retreated into the complex thread by the round knitting machine of a small diameter. The complex thread is used for producing therefrom the knitted fabric by interlacing lastings 1 + 1 in a flat rib knitting machine. The produced fabric is impregnated by a binder based on the phenolformaldehyde resin and is dried by heating or under vacuum till up production of the prepreg m which the quantity of volatile compounds makes up not more 2%.

The prepreg is cut into blanks corresponding to sizes of the friction body, then these blanks are laid, in quantity providing the predermined thickness of the friction body, into a mould.

The compacting of the article is carried out under the pressure of 50-70 kg/cm$^2$ at 150-160°C for 20-60 minutes. After taking the article out of a mould, it is placed in a thermocabin where the final polymerization of the binder is carried out at 200°C for 10 hours, then the article is cooled, the work surface is grinded putting out the film of polymer matrix, the article is painted and stamped.

For the measuring of the dynamic friction coefficient of the material produced in such a way, samples are cut therefrom and they are tested on a friction machine pressing to a disk fabricated from cast iron or steel measuring the temperature on the friction contact by a thermocouple. The normal pressure force of a sample being tested on the disk and the disk's rotation speed are predermined during testings. The braking torque and the temperature are measured and recorded on oscillograth. The test continue till the constant the friction torque and temperature on the friction contact would be established. The dynamic friction coefficient is calculated on data obtained by formula

$$f = \frac{Mfr}{R \times N}$$

where

Mfr -    the friction torque;
R -     the radius from the center of the disk to the middle part of the friction contact;
N -     the normal pressure force.

## Claims

1. A reinforcing filler for producing friction polymer composite material on the base of textile material characterizing in that it presents the knitted fabric knitted from complex threads formed from glass, basalt and cooper threads, or from glass and basalt threads, or from basalt and cooper threads.

2. A friction polymer composite material consisting of a reinforcing filler and a polymer matrix characterized in that the knitted fabric of claim 1, as a filler, is used in which the relationship of volume shares of basalt glass and cooper threads is defined by equality

$$f = 0.438 - 0.0013x1 + 0.0229x2 - 0.00068 (x2)^2, \text{ where}$$

$f$ -    the dynamic friction coefficient of the friction material on steel or cast iron at 200 °C and the slide speed 3.14 m/sec.;
$x1$ -    the volume share of the glass thread in the knitted fabric, % ($0 < x1 < 86$);
$x2$ -    the volume share of the copper thread in the knitted fabric, % ($0 < x2 < 28$);
    the volume share x3 (%) of the basalt thread in the knitted fabric makes up $x3 = 100 - x1 - x2$ and the selection of values of x1, x2 is limited by the relationship

$$(x1/43 + 1)^2 + (x2/14 + 1)^2 = 1.$$

3. The friction polymer composite material according to claim 2 characterized in that the polymer matrix is formed by the polymerization of a cocking binder.

4. The friction polymer composite material according to claim 2 characterized in that the weight relation of the filler and the polymer matrix therein makes up 70 +-5 : 30 -+5.

5. A vehicle brake friction body or a friction body of any production equipment, preferably a motor vehicle brake block, consisting of a carrying reinforcement and a lining rigidly fixed thereon and fabricated from the friction polymer composite material characterized in that the said lining is made of the friction polymer composite material according to claims 2, 3 and 4.

Fig. 1

4

5

Fig. 2

## INTERNATIONAL SEARCH REPORT

International application No.

PCT/RU 97/00042

A. CLASSIFICATION OF SUBJECT MATTER

IPC 6 : F16D 69/02, C08J 5/14

According to International Patent Classification (IPC) or to both national classification and IPC

B. FIELDS SEARCHED

Minimum documentation searched (classification system followed by classification symbols)

IPC 6 : B61H 1/00, 5/00, 7/00-7/02, C08J 5/00, 5/08, 5/14

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | EP, A1, 0000840 (FERODO LIMITED), 21 February 1979 (21.02.79) | 1,2,5 |
| A | SU, A, 1142488 (EREVANSKY POLITEKHNICHESKY INSTITUT), 28 February 1985 (28.02.85) | 1,2 |
| A | SU, A, 518403 ( V.C. MANTSEV et al.), 25 June 1976 (25.06.76), the claims | 5 |
| A | FR, A, 2184362 (JOHNS-MANVILLE CORPORATION), 21 December 1973 (21.12.73) | 1,2 |
| A | EP, A2, 0510875 (NICHIAS CORPORATION), 28 October 1992 (28.10.92) | 1,2 |
| A | GB, A, 1246699 (RAYBESTOS-MANHATTAN INC.), 15 September 1971 (15.09.71) | 2 |

[X] Further documents are listed in the continuation of Box C.   [ ] See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 05 June 1997 (05.06.97) | 25 June 1997 (25.06.97) |

| Name and mailing address of the ISA/<br>RU | Authorized officer |
|---|---|
| Facsimile No. | Telephone No. |

Form PCT/ISA/210 (second sheet) (July 1992)

**INTERNATIONAL SEARCH REPORT**

| International application No. |
|---|
| PCT/RU  97/00042 |

C (Continuation).     DOCUMENTS CONSIDERED TO BE RELEVANT

| Category* | Citation of document, with indication, where appropriate, of the relevant passages | Relevant to claim No. |
|---|---|---|
| A | O.G. TSYPLAKOV " Konstruirovanie izdely iz kompozitsion- nykh voloknistykh ma alov ", 1984, izd. " Mashinostroe- nie " (Leningrad), page 25 <br> --- | 1 |

Form PCT/ISA/210 (continuation of second sheet) (July 1992)